(19) **Europäisches Patentamt / European Patent Office / Office européen des brevets**

(11) **EP 4 642 109 A1**

(12) **EUROPEAN PATENT APPLICATION**
published in accordance with Art. 153(4) EPC

(43) Date of publication:
**29.10.2025 Bulletin 2025/44**

(21) Application number: **23916445.2**

(22) Date of filing: **20.12.2023**

(51) International Patent Classification (IPC):
**H04W 52/32** (2009.01)   **H04W 52/24** (2009.01)
**H04W 74/00** (2009.01)   **H04W 74/08** (2024.01)

(52) Cooperative Patent Classification (CPC):
**H04W 52/24; H04W 52/32; H04W 74/00;
H04W 74/08**

(86) International application number:
**PCT/KR2023/021175**

(87) International publication number:
**WO 2024/150962 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 KR 20230005753
17.01.2023 KR 20230007002**

(71) Applicant: **Samsung Electronics Co., Ltd.
Suwon-si, Gyeonggi-do 16677 (KR)**

(72) Inventor: **KIM, Hyuncheol
Suwon-si Gyeonggi-do 16677 (KR)**

(74) Representative: **HGF
HGF Limited
1 City Walk
Leeds LS11 9DX (GB)**

(54) **ELECTRONIC DEVICE AND METHOD FOR RECEIVING RANDOM ACCESS SIGNAL IN WIRELESS COMMUNICATION SYSTEM**

(57)    In embodiments, an electronic device for a base station is provided. The electronic device may include a memory, at least one transceiver, and at least one processor coupled to the memory and the at least one transceiver. The at least one processor may be configured to acquire preamble signals related to signals received through multiple antennas on the basis of a physical random access channel (PRACH) area. The at least one processor may be configured to acquire interference information from a correlation matrix of the preamble signals. The at least one processor may be configured to determine a detection threshold value for preamble detection on the basis of the interference information. The at least one processor may be configured to determine, on the basis of comparison between output power determined on the basis of the preamble signals and the detection threshold value, whether a PRACH signal is detected. The output power may include power for modified preamble signals changed on the basis of the interference information or the preamble signals.

FIG. 7

EP 4 642 109 A1

## Description

### [Technical Field]

The present disclosure relates to a wireless communication system. More specifically, the present disclosure relates to an electronic device and a method for receiving a random access signal in a wireless communication system.

### [Background Art]

A service region by a mobile communication network is divided into a plurality of tracking regions. For mobility management of user equipment (UE), paging messages broadcast in the plurality of tracking regions and a tracking region update procedure of an electronic device moving from one tracking region to another tracking region may be used.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

In embodiments, a method performed by a base station is provided. The method may comprise obtaining preamble signals related to signals received through a plurality of antennas based on a physical random access channel (PRACH) region. The method may comprise obtaining interference information from a correlation matrix of the preamble signals. The method may comprise determining a detection threshold for preamble detection based on the interference information. The method may comprise determining whether a PRACH signal is detected based on comparing output power determined based on the preamble signals with the detection threshold. The output power may comprise power for modified preamble signals changed based on the preamble signals or the interference information.

In embodiments, an electronic device for a base station is provided. The electronic device may include memory, at least one transceiver, and at least one processor coupled to the memory and the at least one transceiver. The at least one processor may be configured to obtain preamble signals related to signals received through a plurality of antennas based on a physical random access channel (PRACH) region. The at least one processor may be configured to obtain interference information from a correlation matrix of the preamble signals. The at least one processor may be configured to determine a detection threshold for preamble detection based on the interference information. The at least one processor may be configured to determine whether a PRACH signal is detected based on comparing output power determined based on the preamble signals with the detection threshold. The output power may comprise power for modified preamble signals changed based on the preamble signals or the interference information.

In embodiments, a digital unit (DU) is provided. The DU may comprise memory storing instructions and at least one processor. The instructions, when executed by the at least one processor, may cause the electronic device to obtain preamble signals related to signals received through a plurality of antennas of a radio unit (RU) based on a physical random access channel (PRACH) region, obtain interference information from a correlation matrix of the preamble signals, determine a detection threshold for preamble detection based on the interference information, and determine whether a PRACH signal is detected based on comparing output power determined based on the preamble signals with the detection threshold. The output power may comprise power for modified preamble signals changed based on the preamble signals or the interference information.

In embodiments, a radio unit (RU) is provided. The RU may comprise memory storing instructions and at least one processor. The instructions, when executed by the at least one processor, may cause the electronic device to obtain preamble signals related to signals received through a plurality of antennas based on a physical random access channel (PRACH) region, obtain interference information from a correlation matrix of the preamble signals, determine a detection threshold for preamble detection based on the interference information, and determine whether a PRACH signal is detected based on comparing output power determined based on the preamble signals with the detection threshold. The output power may comprise power for modified preamble signals changed based on the preamble signals or the interference information.

In embodiments, a non-transitory computer-readable storage medium is provided. The non-transitory computer-readable storage medium may comprise instructions including obtaining preamble signals related to signals received through a plurality of antennas based on a physical random access channel (PRACH) region, obtaining interference information from a correlation matrix of the preamble signals, determining a detection threshold for preamble detection based on the interference information, and determining whether a PRACH signal is detected based on comparing output power determined based on the preamble signals with the detection threshold. The output power may comprise power for modified preamble signals changed based on the preamble signals or the interference information.

**[Description of the Drawings]**

FIG. 1 illustrates a wireless communication system.
FIG. 2 illustrates an example of a base station.
FIG. 3 illustrates an example of a resource structure in a time region and a frequency region.
FIG. 4 illustrates an example of channels in a communication standard.
FIG. 5 illustrates an example of a structure of a random access signal.
FIGS. 6A to 6B illustrate examples of interference between a physical uplink shared channel (PUSCH) and a physical random access channel (PRACH) in a cell.
FIG. 7 illustrates an example of a PRACH detector.
FIG. 8 illustrates an example of false alarm control.
FIG. 9 illustrates an example of interference control.
FIG. 10 illustrates an example of performance of false alarm control.
FIG. 11A illustrates a functional configuration of a distributed unit (DU) according to embodiments.
FIG. 11B illustrates a functional configuration of a radio unit (RU) according to embodiments.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In the following description, a term referring to a signal (e.g., signal, information, message, and signaling), a term referring to a resource (e.g., symbol, slot, subframe, radio frame, subcarrier, resource element (RE), resource block (RB), bandwidth part (BWP), and occasion), a term for a computational state (e.g., step, operation, and procedure), a term referring to data (e.g., packet, user stream, information, bit, symbol, and codeword), a term referring to a channel, a term referring to network entities, a term referring to a component of a device, and the like are illustrated for convenience of description. Therefore, the present disclosure is not limited to the terms described below, and other terms having the same technical meanings may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

This disclosure describes various embodiments using terms used in some communication standards (e.g., 3rd Generation Partnership Project (3GPP), extensible radio access network (xRAN), open-radio access network (O-RAN)), but this is merely an example for explanation. Various Embodiments of the present disclosure may also be applied to other communication systems.

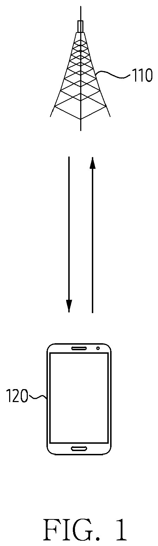

FIG. 1 illustrates an example of a wireless communication system.

Referring to FIG. 1, FIG. 1 illustrates a base station 110 and a terminal 120 as a portion of nodes using a wireless channel in a wireless communication system. Although FIG. 1 illustrates only one base station, the wireless communication system may further include another base station identical to or similar to the base station 110.

The base station 110 is a network infrastructure for providing wireless access to the terminal 120. The base station 110 has coverage defined based on a distance at which a signal may be transmitted. In addition to a base station, the base station 110 may be referred to as an 'access point (AP)', an 'eNode B (eNB)', a '5th generation node', a 'next generation node B (gNB)', a 'wireless point', a 'transmission/reception point (TRP)', or another term having a technical meaning equivalent thereto.

The terminal 120, which is a device used by a user, communicates with the base station 110 through the wireless channel. A link from the base station 110 to the terminal 120 is referred to as downlink (DL), and a link from the terminal 120 to the base station 110 is referred to as uplink (UL). In addition, although not illustrated in FIG. 1, the terminal 120 and another terminal may perform communication with each other through the wireless channel. In this case, a device-to-device link (D2D) between the terminal 120 and the other terminal is referred to as a sidelink, and the sidelink may be used interchangeably with a PC5 interface. In some other embodiments, the terminal 120 may be operated without user involvement. According to an embodiment, the terminal 120, which is a device that performs machine type communication (MTC), may not be carried by the user. In addition, according to an embodiment, the terminal 120 may be a narrowband (NB)-internet of things (IoT) device.

In addition to a terminal, the terminal 120 may be referred to as 'user equipment (UE)', 'customer premises equipment (CPE)', a 'mobile station', a 'subscriber station', a 'remote terminal', a 'wireless terminal', an 'electronic device', or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3), or FR 3 of NR), and a mmWave band (e.g., 28GHz, 30GHz, 38GHz, or 60GHz). To improve a channel gain, the base station 110 and the terminal 120 may perform the beamforming. Herein, the beamforming may include transmission beamforming and reception beamforming. The base station 110 and the terminal 120 may assign directivity to a transmission signal or a reception signal. To this end, the base station 110 and the terminal 120 may select serving beams through a beam search or beam management procedure. After the serving beams are selected, subsequent communication may be performed through a resource that is in a QCL relationship with a resource that has transmitted the serving beams.

If large-scale characteristics of a channel transmitting a symbol on a first antenna port may be estimated from a channel transmitting a symbol on a second antenna port, the first antenna port and the second antenna port may be evaluated to be in the QCL relationship. For example, the large-scale characteristics may include at least one of a delay spread, a Doppler spread, a Doppler shift, an average gain, an average delay, and a spatial receiver parameter.

In FIG. 1, it has been described that both the base station 110 and the terminal 120 perform the beamforming, but embodiments of the present disclosure are not necessarily limited thereto. In some embodiments, the terminal may or may not perform the beamforming. Also, the base station may or may not perform the beamforming. That is, only one of the base station and the terminal may perform the beamforming, or both the base station and the terminal may not perform the beamforming.

In the present disclosure, a beam, which refers to a spatial flow of a signal in a wireless channel, may be formed by one or more antennas (or antenna elements), and this formation process may be referred to as beamforming. The beamforming may include at least one of analog beamforming or digital beamforming (e.g., precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, IE such as a CSI-RS resource or an SRS-resource, and the like, may be used as a configuration with respect to each reference signal, and this configuration may include information associated with the beam. The information associated with the beam may mean whether a corresponding configuration (e.g., the CSI-RS resource) uses the same spatial domain filter as another configuration (e.g., another CSI-RS resource within the same CSI-RS resource set) or a different spatial domain filter, or whether it is quasi-co-located (QCL) with a certain reference signal and, if it is QCL, what type (e.g., QCL type A, B, C, or D) it is.

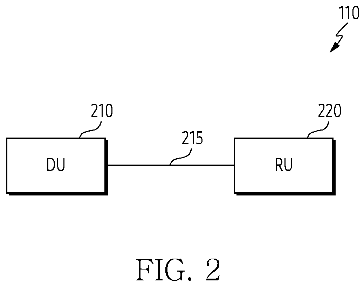

FIG. 2 illustrates an example of a base station. In FIG. 2, DU and RU in which functions of the base station are divided and implemented by different entities are described. A fronthaul interface may be used for communication between DU and RU. The fronthaul refers to between entities between a wireless RAN and a base station, unlike a backhaul between a base station and a core network. In FIG. 2, it illustrates an example of a fronthaul structure between a DU 210 and one RU 220, but this is only for convenience of explanation and the present disclosure is not limited thereto. In other words, an embodiment of the present invention may also be applied to a fronthaul structure between one DU and a plurality of RUs. For example, the embodiment of the present disclosure may be applied to a fronthaul structure between one DU and two RUs. In addition, the embodiment of the present disclosure may be applied to a fronthaul structure between one DU and three RUs.

Referring to FIG. 2, the base station 110 may include the DU 210 and the RU 220. A fronthaul 215 between the DU 210 and the RU 220 may be operated through an Fx interface. For an operation of the fronthaul 215, for example, an interface such as an enhanced common public radio interface (eCPRI) and a radio over Ethernet (ROE) may be used.

With development of communication technology, mobile data traffic has increased, and accordingly, a bandwidth requirement amount required by a fronthaul between a digital unit and a wireless unit have increased significantly. In a disposition such as a centralized/cloud radio access network (C-RAN), the DU may be implemented to perform functions with respect to a packet data convergence protocol (PDCP), a radio link control (RLC), a media access control (MAC), and physical (PHY), and the RU may be implemented to perform more functions with respect to a PHY layer in addition to a radio frequency (RF) function.

The DU 210 may handle an upper layer function of a wireless network. For example, the DU 210 may perform a function of a MAC layer and a portion of the PHY layer. Herein, the portion of the PHY layer, which is performed at a higher level among functions of the PHY layer, may include, for example, channel encoding (or channel decoding), scrambling (or descrambling), modulation (or demodulation), layer mapping (or layer demapping). According to an embodiment, in a case that the DU 210 follows an O-RAN standard, it may be referred to as an O-RAN DU (O-DU). The DU 210 may be represented by being replaced with a first network entity for a base station (e.g., gNB) in embodiments of the present disclosure as needed.

The RU 220 may handle a lower layer function of the wireless network. For example, the RU 220 may perform a portion of the PHY layer and an RF function. Herein, the portion of the PHY layer, which is performed at a relatively lower level than the DU 210 among the functions of the PHY layer, may include, for example, iFFT conversion (or FFT conversion), CP insertion (CP removal), and digital beamforming. The RU 220 may be referred to as an 'access unit (AU)', an 'access point (AP)', a 'transmission/reception point (TRP)', a 'remote radio head (RRH)', a 'radio unit (RU)', or another term having a technical meaning equivalent thereto. According to an embodiment, in a case that the RU 220 follows the O-RAN standard, it may be referred to as an O-RAN RU (O-RU). The RU 220 may be represented by being replaced with a second network entity for the base station (e.g., the gNB) in the embodiments of the present disclosure as needed.

In FIG. 2, it is illustrated that the base station 110 includes the DU 210 and the RU 220, but the embodiments of the present disclosure are not limited thereto. The base station according to the embodiments may be implemented as a distributed deployment according to a centralized unit (CU) configured to perform functions of upper layers (e.g., a packet data convergence protocol (PDCP), or a radio resource control (RRC)) of an access network, and a distributed unit (DU) configured to perform functions of lower layers. As an example, the distributed unit (DU) may include the digital unit (DU) and the radio unit (RU) of FIG. 2. In addition, as an example, between a core (e.g., a 5G core or a next generation core (NGC)) network and a wireless network (RAN), the base station may be implemented in a structure disposed in an order of the CU, the DU, and the RU. An interface between the CU and the distributed unit (DU) may be referred to as an F1 interface.

The centralized unit (CU) may handle a function of a higher layer than the DU by being connected to one or more DUs. For example, the CU may handle a function of a radio resource control (RRC) and packet data convergence protocol (PDCP) layer, and the DU and the RU may handle a function of a lower layer. The DU may perform radio link control (RLC), media access control (MAC), and some functions (high PHY) of the physical (PHY) layer, and the RU may handle remaining functions (low PHY) of the PHY layer. In addition, as an example, the digital unit (DU) may be included in the distributed unit (DU) according to the distributed deployment implementation of the base station. Hereinafter, it is described as operations of the digital unit (DU) and the RU unless otherwise defined, but various embodiments of the present disclosure may be applied to both a base station deployment including the CU, or a deployment in which the DU is directly connected to a core network (i.e., implemented by being integrated as a base station (e.g., a NG-RAN node) in which the CU and the DU are one entity).

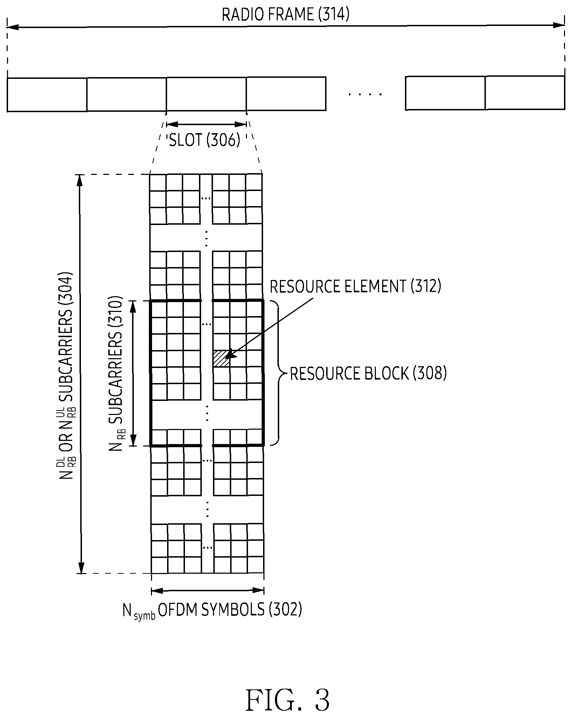

FIG. 3 illustrates an example of a resource structure in a time region and a frequency region. FIG. 3 illustrates a basic structure of a time-frequency region, which is a radio resource region in which data or a control channel is transmitted in downlink or uplink.

Referring to FIG. 3, a horizontal axis indicates the time region and a vertical axis indicates the frequency region. A minimum transmission unit in the time region is an OFDM symbol, and $N_{symb}$ OFDM symbols 302 constitute one slot 306. A length of a subframe is defined as 1.0 ms, and a length of a radio frame 314 is defined as 10 ms. A minimum transmission unit in the frequency region is a subcarrier, and a carrier bandwidth constituting a resource grid is composed of $N_{RB}^{DL}$ (in a case of downlink) or $N_{RB}^{UL}$ (in a case of uplink) subcarriers 304.

A basic unit of a resource in the time-frequency region is a resource element (hereinafter, 'RE') 312, which may be indicated by an OFDM symbol index and a subcarrier index. A resource block may include a plurality of resource elements. In an LTE system, a resource block (RB) (or a physical resource block, hereinafter, 'PRB') is defined as $N_{symb}$ consecutive OFDM symbols in the time region and $N_{SC}^{RB}$ consecutive subcarriers in the frequency region. In an NR system, a resource block (RB) 308 may be defined as $N_{SC}^{RB}$ consecutive subcarriers 310 in the frequency region. One RB 308 includes $N_{SC}^{RB}$ REs 312 in the frequency axis. In general, a minimum unit of transmission of data is an RB and the number of subcarriers, $N_{SC}^{RB}$, is 12. The frequency region may include common resource blocks (CRBs). A physical resource block (PRB) may be defined in a bandwidth part (BWP) on the frequency region. CRB and PRB numbers may be determined according to subcarrier spacing. A data rate may increase in proportion to the number of RBs scheduled for a terminal.

In an NR system, in a case of a frequency division duplex (FDD) system that operates by separating downlink and uplink by frequency, downlink transmission bandwidth and uplink transmission bandwidth may be different from each other. Channel bandwidth indicates radio frequency (RF) bandwidth corresponding to system transmission bandwidth.

Table 1 illustrates a portion of a correspondence among system transmission bandwidth, subcarrier spacing (SCS), and channel bandwidth defined in an NR system in a frequency range lower than x GHz (e.g., a frequency range (FR) 1 (310 MHz to 7125 MHz)). And Table 2 illustrates a portion of a correspondence among transmission bandwidth, subcarrier spacing (SCS), and channel bandwidth defined in the NR system in a frequency range higher than y GHz (e.g., an FR2 (24250 MHz - 52600 MHz) or an FR2-2 (52600 MHz to 71000 MHz)). For example, in an NR system having 100 MHz channel bandwidth at 30 kHz subcarrier spacing, transmission bandwidth is composed of 273 RBs. In Table 1 and Table 2, N/A may be a bandwidth-subcarrier combination not supported in an NR system.

[Table 1]

| Channel bandwith [MHz] | SCS | 5 | 10 | 20 | 50 | 80 | 100 |
|---|---|---|---|---|---|---|---|
| Transmission bandwidth configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwith [MHz] | SCS | 50 | 100 | 200 | 400 |
|---|---|---|---|---|---|
| Transmission bandwidth configuration NRB | 60kHz | 66 | 132 | 264 | N/A |
| | 120kHz | 32 | 66 | 132 | 264 |

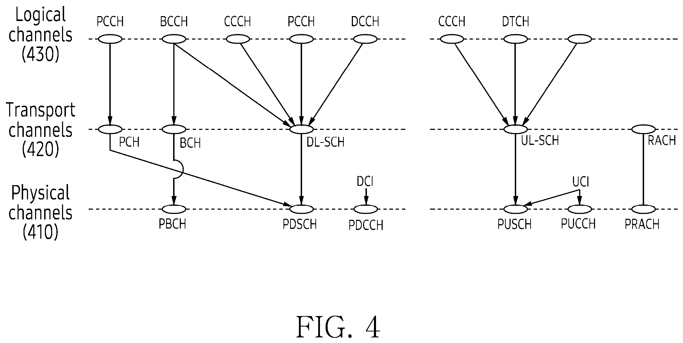

FIG. 4 illustrates an example of channels in a communication standard. The channels may include a physical channel 410, a transport channel 420, and a logical channel 430 according to layers defined in the communication standard.

Referring to FIG. 4, the physical channel 410 may provide functions (e.g., channel coding, HARQ processing, modulation, multi-antenna processing, and resource mapping) necessary to generate physical signals in a physical layer. In the physical layer, the physical signals are modulated in an OFDM manner and may be transmitted in a wireless environment through a time-frequency resource (e.g., a resource in the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may include symbols transmitted through the PDCCH. In addition, in the downlink, besides the channels illustrated in FIG. 4, an SS/PBCH block, which includes a synchronization signal (e.g., a primary synchronization signal (PSS) and a secondary synchronization signal (SSS)) and a broadcast signal (e.g., PBCH), may be transmitted for synchronization. In addition, in the downlink, a channel state information-reference signal (CSI-RS) for measurement or obtaining channel information, a demodulation reference signal (DMRS) for channel estimation and demodulation, and a phase tracking reference signal (PTRS) may be transmitted.

In uplink transmission, the physical channel 410 may include at least one of a physical uplink shared channel (PUSCH), a physical uplink control channel (PUCCH), or a physical random access channel (PRACH). The PUSCH or PUCCH may be used to carry uplink control information (UCI). In general, uplink data may refer to symbols transmitted through the PUSCH, and an uplink control signal may include symbols corresponding to the UCI. For example, the UCI may include at least one of a scheduling request (SR), a hybrid automatic request acknowledgement (HARQ-ACK) bit(s), or channel state information (CSI). In addition, in the uplink, besides the channels illustrated in FIG. 4, a DMRS and a PTRS for channel estimation and demodulation may be transmitted in the downlink for channel estimation.

The transport channel 420 may connect the physical layer and a medium access channel (MAC) layer positioned above (higher layer) the physical layer, and may be classified according to how data is transmitted through a radio interface. In the downlink, the transport channel 420 may include at least one of a paging channel (PCH) for paging, a broadcast channel (BCH) for broadcasting system information, and a downlink shared channel (DL-SCH) for transmission of downlink data. In the uplink, the transport channel 420 may include at least one of a random access channel (RACH) for transmission of random access preambles or an uplink shared channel (UL-SCH) for transmission of downlink data.

The logical channel 430 is positioned above a transport channel and is mapped to the transport channel 420. The logical channel 430 may be classified into a control channel for transmitting control region information and a traffic channel for transmitting user region information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, a random access signal may include sequences transmitted through the physical random access channel (PRACH). The term 'data' may include signals other than a reference signal. For example, 'data' obtained by a receiver in uplink communication may include signals transmitted through the PUSCH. However, the PUSCH is merely exemplary, and embodiments of the present disclosure may also be applied to other channels (e.g., PDSCH, PBCH, PDCCH, and PUCCH) that require channel estimation.

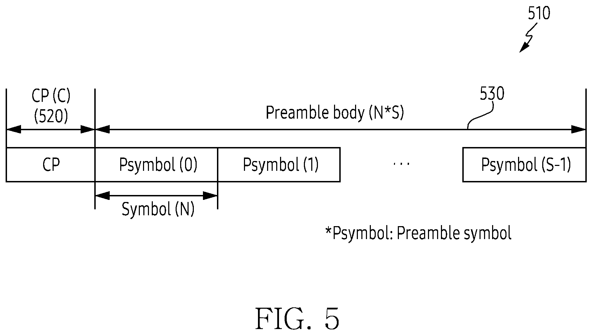

FIG. 5 illustrates an example of a structure of a random access signal. The random access signal may be transmitted through a PRACH. The random access signal may be referred to as a PRACH, a preamble, a random access channel (RACH) preamble, a RACH signal, a random access preamble, or terms having the same technical meaning.

Referring to FIG. 5, a random access signal 510 may include a CP 520 and a preamble body 530. The preamble body 530 may include one or more symbols. The number of the one or more symbols may have various values according to a preamble format specified in a standard (e.g., 3GPP LTE and 3GPP NR). Reception of the random access signal 510 through the PRACH may be performed through the preamble body 530.

The random access signal 510 may be generated based on a sequence (e.g., a Zadoff-Chu (ZC) sequence) according to a preamble length. The preamble length, given as the $L_{RA}$ value, may have various values. For example, the preamble length may be 839. For another example, the preamble length may be 139.

According to the preamble length, a preamble format for the random access signal 510 may be determined. For example, a preamble format having a length of 839 may be configured as shown in Table 3.

[Table 3]

| Format | $L_{RA}$ | $\Delta f^{RA}$ | $N_u$ | $N_{cp}^{RA}$ |
|--------|----------|-----------------|---------|----------------|
| 0 | 839 | 1.25 *kHz* | 24576*k* | 3168*k* |
| 1 | 839 | 1.25 *kHz* | 2-24576*k* | 21024*k* |
| 2 | 839 | 1.25 *kHz* | 4-24576*k* | 4688*k* |
| 3 | 839 | 5 *kHz* | 4-6144*k* | 3168*k* |

$L_{RA}$ indicates the preamble length, $\Delta f^{RA}$ indicates the SCS, $N_u$ indicates a length of the preamble body 530, $N_{cp}^{RA}$ indicates a length of the CP 520, and *k* indicates a ratio between $T_s$ and $T_c$. $T_s$ indicates a basic time unit, and $T_c$ indicates a sampling time unit.

For example, a preamble format having a length of 139 may be configured as shown in Table 4.

[Table 4]

| Format | $L_{RA}$ | $\Delta f^{RA}$ | $N_u$ | $N_{cp}^{RA}$ |
|--------|----------|-----------------|---------|----------------|
| A1 | 139 | 15 ▪ $2^u$ *kHz* | $2 \cdot 2048k \cdot 2^{-u}$ | $288k \cdot 2^{-u}$ |
| A2 | 139 | 15 ▪ $2^u$ *kHz* | $4 \cdot 2048k \cdot 2^{-u}$ | $576k \cdot 2^{-u}$ |
| A3 | 139 | 15 ▪ $2^u$ *kHz* | $6 \cdot 2048k \cdot 2^{-u}$ | $864k \cdot 2^{-u}$ |
| B1 | 139 | 15 ▪ $2^u$ *kHz* | $2 \cdot 2048k \cdot 2^{-u}$ | $216k \cdot 2^{-u}$ |
| B2 | 139 | 15 ▪ $2^u$ *kHz* | $4 \cdot 2048k \cdot 2^{-u}$ | $360k \cdot 2^{-u}$ |
| B3 | 139 | 15 ▪ $2^u$ *kHz* | $6 \cdot 2048k \cdot 2^{-u}$ | $504k \cdot 2^{-u}$ |
| B4 | 139 | 15 ▪ $2^u$ *kHz* | $12 \cdot 2048k \cdot 2^{-u}$ | $936k \cdot 2^{-u}$ |
| C0 | 139 | 15 ▪ $2^u$ *kHz* | $2048k \cdot 2^{-u}$ | $1240k \cdot 2^{-u}$ |
| C2 | 139 | 15 ▪ $2^u$ *kHz* | $4 \cdot 2048k \cdot 2^{-u}$ | $2048k \cdot 2^{-u}$ |

$L_{RA}$ indicates the preamble length, $\Delta f^{RA}$ indicates the SCS, $N_u$ indicates a length of the preamble body 530, $N_{cp}^{RA}$ indicates a length of the CP 520, and *k* indicates the ratio between $T_s$ and $T_c$. $T_s$ indicates a basic time unit, and $T_c$ indicates a sampling time unit.

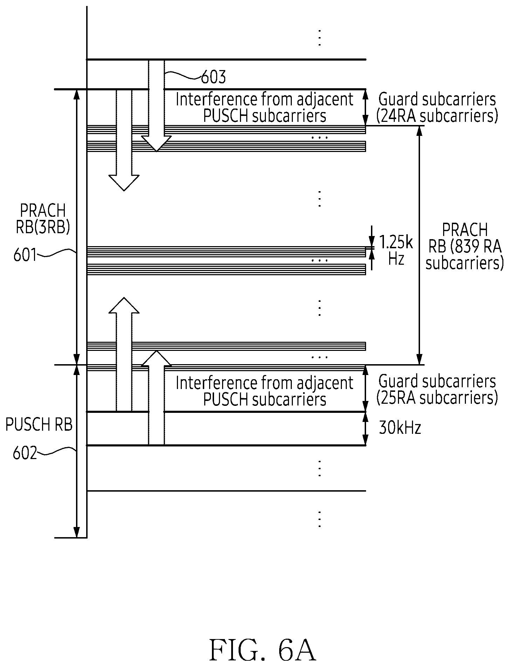

FIGS. 6A to 6B illustrate examples of interference between a physical uplink shared channel (PUSCH) and a physical random access channel (PRACH) in a cell. To support wide cell coverage, SCS of a random access signal 510 in an OFDM may be equal to or smaller than the SCS generally used in another uplink channel.

Referring to FIG. 6A, a PRACH preamble (e.g., the random access signal 510) may be allocated on a PRACH region 601. For example, the PRACH preamble may include sequences according to format 0 (i.e., L=839, PRACH SCS=1.25 kHz). A PUSCH signal may be allocated on a PUSCH region 602. For example, an SCS of the PUSCH may be 30 kHz. The PRACH region 601 may include a total of three RBs. In a case that the SCS of the PRACH and the SCS of the PUSCH do not match, interference 603 may occur in the PRACH region 601 due to the PUSCH signal. Guard sections (e.g., 24 random access (RA) subcarriers and 25 RA subcarriers) exist respectively above and below the PRACH region 601. The PUSCH signal on the PUSCH region 602 may flow into the PRACH region 601 either in each guard section or beyond the corresponding guard section. In this case, the PUSCH signal may act as interference to the PRACH preamble.

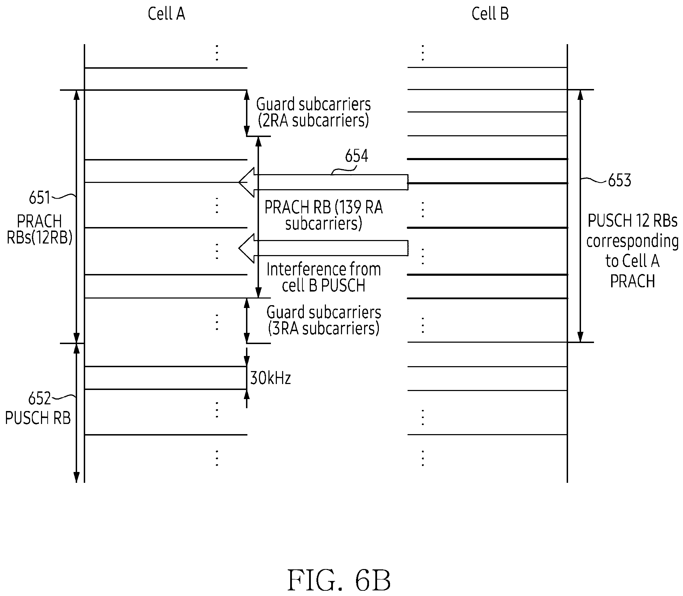

Referring to FIG. 6B, a PRACH preamble (e.g., the random access signal 510) may be allocated on a PRACH region 351 of cell A. For example, the PRACH preamble may include sequences according to format C0 (i.e., L=139, PRACH SCS=30 kHz). A PUSCH signal may be allocated on a PUSCH region 652 of cell A. For example, an SCS of the PUSCH may be 30 kHz. A PUSCH signal may be allocated on a PUSCH region 653 of cell B. For example, an SCS of the PUSCH may be 30 kHz. The PRACH region 651 may include a total of twelve RBs. Since a receiver receives and samples a signal in a frequency unit (e.g., subcarrier), a signal of another cell corresponding to the same frequency may act as interference to a currently serving cell. Signals 654 on frequencies of the PUSCH region 653 of cell B, corresponding to frequencies of the PRACH region 651 of cell A, may act as interference to the PRACH preamble of cell A.

As described in FIGS. 6A to 6B, interference may occur in a resource region for a PRACH signal due to a UL signal (e.g., PUSCH) of the same cell or another cell. Due to the interference of the UL signal, a signal received at the receiver increases. The receiver may determine detection of a PRACH preamble even though no actual PRACH preamble has been transmitted. In a case that interference exists in a resource region for a PRACH symbol, a false alarm increases as correlation between antennas increases.

Assume that, in an environment in which noise is independent between antennas (i.e., an environment without interference) of a PRACH detector in a base station, a threshold satisfying a Target False Alarm (TFA) (e.g., FA<0.1%) is set. As interference increases, a false alarm of the PRACH detector also increases. In an environment in which a large interference exists, the FA becomes very large and becomes close to 1. In actual operation, a threshold should be set by assuming the most interfered environment (i.e., the worst case) to satisfy the TFA in all environments. However, if the threshold is set by assuming only the most interfered environment, detection performance in an environment without interference in the PRACH RB may deteriorate.

To solve the above-described problem, hereinafter, the present disclosure describes a technique for reducing interference of a received signal, adaptively controlling a threshold according to the interference, in a wireless communication system, thereby reducing a false alarm for a random access signal and improving detection performance.

A terminal 120 may transmit a random access signal (e.g., the random access signal 510 and a PRACH preamble) to a base station 110 through an uplink channel (e.g., a PRACH). The base station 110 may receive the random access signal from the terminal 120. In an Orthogonal Frequency Division Multiplexing (OFDM) based mobile communication system (e.g., LTE, NR, NR-U (unlicensed)) a PRACH detector based on Fast Fourier Transform (FFT)/Inverse FFT (IFFT) is generally required to receive the random access signal.

In an environment in which interference occurs in an RB region (e.g., a PRACH region 301 and a PRACH region 351) of a PRACH preamble, a method for controlling a false alarm of the base station 110 including a PRACH detector is described. Meanwhile, in the present disclosure, an operation of the base station 110 including the PRACH detector is described for explaining an operation for receiving the PRACH, but this description does not exclude at least some of the operations of the base station 110 from being performed by a DU 210 and at least some others from being performed by an RU 220. That is, according to an implementation method of the base station 110, all operations described below may be performed by a single network entity, or the operations may be divided and performed by a plurality of network entities (e.g., the DU 210 and the RU 220).

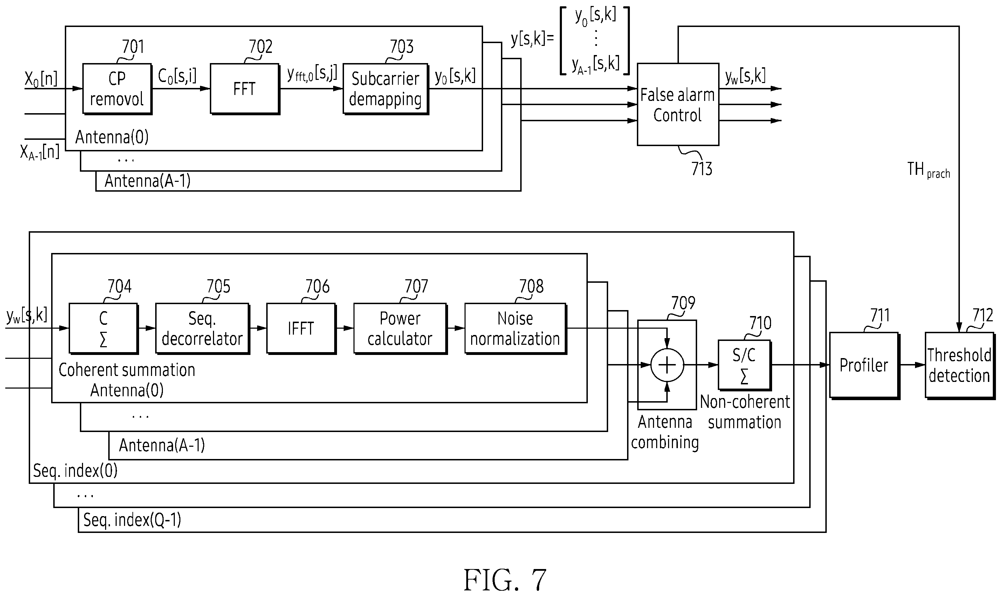

FIG. 7 illustrates an example of a PRACH detector. Operations of the PRACH detector described in FIG. 7 may be performed by a base station (e.g., a base station 110). Functional blocks are illustrated to describe the operations of the PRACH detector, but the functional blocks are merely exemplary and should not be construed as limiting other embodiments of the present disclosure. In addition, at least some of the operations of the PRACH detector may be performed by a network entity (e.g., an RU 220), and the remaining operations may be performed by another network entity (e.g., a DU 210). A term such as '... unit', '... device', and the like, used hereinafter, may refer to a unit that processes at least one function or operation, and may be implemented as hardware, software, or a combination of hardware and software.

Referring to FIG. 7, the base station 110 may receive signals. For example, the base station 110 may include antennas. The base station 110 may receive the signals through the antennas. A signal received through the $(a+1)^{th}$ antenna may be represented as $X_a[n]$. The base station 110 may receive the signal $X[n] = [X_0[n] \cdots X_{A-1}[n]]^T$. For example, a terminal (e.g., a terminal 120) may transmit a PRACH signal through one antenna port. The base station 110 may receive the PRACH signal through the plurality of antennas (e.g., eight receiving antennas). Since the signals are received through different antennas, even if the same PRACH signal is transmitted, the base station 110 may obtain different signals.

In operation 701, the base station 110 may perform CP removal. The CP removal may be performed in a time domain. The base station 110 may remove a CP (e.g., a CP 520) from the received signal and then generate a signal in a symbol unit (hereinafter, a time domain signal) based on a preamble body (e.g., a preamble body 530). According to an embodiment, the operation 701 may be performed by the RU 220 of the base station 110 by a specific function split. In other words, a CP removal function corresponding to the operation 701 may be performed by the RU 220. According to another embodiment, the operation 701 may be performed by the DU 220 of the base station 110 by a specific function split. For example, the time domain signal may be represented by the following equation.

【Equation 1】

$$\mathbf{c}[s,i] = \begin{bmatrix} c_0[s,i] \\ \vdots \\ c_{A-1}[s,i] \end{bmatrix}$$

Here, $s$ indicates a Symbol index ($s = 0 \sim S - 1$, with $S$ being the number of symbols), $i$ indicates a Sample index in the Symbol ($i = 0 \sim N_{FFT} - 1$, with $N_{FFT}$ being a FFT size), and A indicates the number of antennas of the base station 110 (or the RU 220). The base station 110 may generate

$$c_a[s,i]$$

for the $(a+1)^{th}$ antenna through a CP removal calculation applied to the signal $X_a[n]$ received through the $(a+1)^{th}$ antenna.

In operation 702, the base station 110 may perform an FFT calculation. The base station 110 may generate a frequency domain signal by performing the FFT calculation on the time domain signal. According to an embodiment, the operation 702 may be performed by the RU 220 of the base station 110 by a function split. In other words, the FFT calculation corresponding to the operation 702 may be performed by the RU 220. According to another embodiment, the operation 701 may be performed by the DU 210 of the base station 110 by a specific function split. For example, the frequency domain signal may be represented by the following equation.

【Equation 2】

$$\mathbf{y}_{fft}[s,j] = \begin{bmatrix} y_{fft,0}[s,j] \\ \vdots \\ y_{fft,A-1}[s,j] \end{bmatrix}$$

Here, $j$ indicates a subcarrier index and has a range of $j = 0 \sim N_{FFT} - 1$. NFFT indicates an FFT length of the operation 702. The base station 110 may generate $y_{fft,a}[s,j]$ for the $(a+1)^{th}$ antenna by performing an FFT on

$$c_a[s,i]$$

for the $(a+1)^{th}$ antenna.

In operation 703, the base station 110 may perform subcarrier demapping. The subcarrier demapping may identify a signal (hereinafter, a preamble signal) corresponding to subcarriers allocated for a preamble in a frequency domain signal. The base station 110 may identify the preamble signal in the frequency domain signal. According to an embodiment, the operation 703 may be performed by the DU 210 of the base station 110 by a specific function split. In other words, a subcarrier demapping function corresponding to the operation 703 may be performed by the DU 210. According to another embodiment, the operation 703 may be performed by the RU 220 of the base station 110 by a specific function split. For example, the preamble signal may be represented by the following equation.

【Equation 3】

$$y[s,k] = \begin{bmatrix} y_0[s,k] \\ \vdots \\ y_{A-1}[s,k] \end{bmatrix}$$

$k$ has a value of $0 \sim L_{RA} - 1$. $L_{RA}$ indicates a length of a preamble sequence used in a frequency region and is less than or equal to $N_{FFT}$. The base station 110 may generate $y_a[s,k]$ for the $(a+1)^{th}$ antenna by performing the subcarrier demapping on $y_{fft,a}[s,j]$ for the $(a+1)^{th}$ antenna.

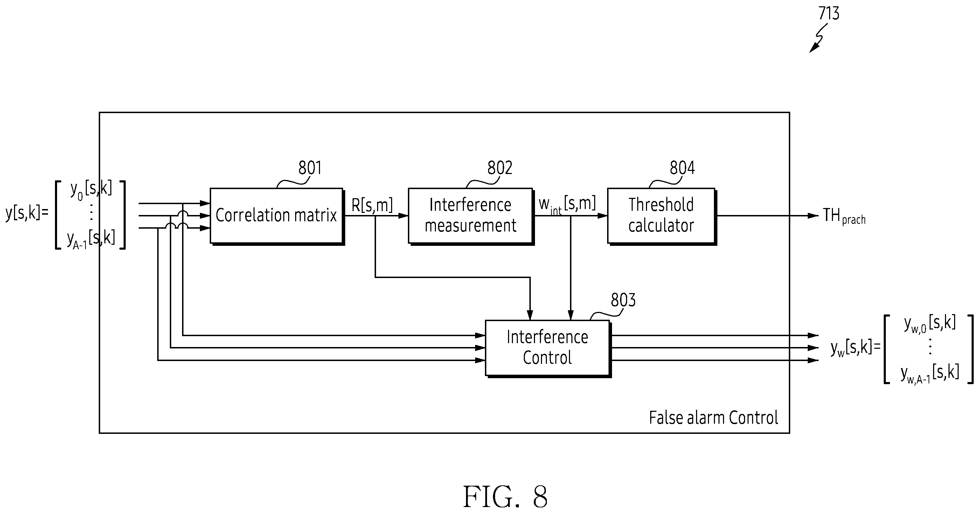

The base station 110 according to embodiments may include a false alarm control unit 713. The false alarm control unit 713 may be configured to measure interference based on the preamble signal. The false alarm control unit 713 may be configured to control interference based on the preamble signal. For example, the false alarm control unit 713 may provide a signal (hereinafter, an output preamble signal) (e.g., $y_w[s,k] = \begin{bmatrix} y_{w,0}[s,k] \\ \vdots \\ y_{w,A-1}[s,k] \end{bmatrix}$) in which interference control has been completed in the preamble signal. The false alarm control unit 713 may be configured to determine a threshold (e.g., $TH_{prach}$) related to a false alarm based on the preamble signal. For example, the false alarm control unit 713 may provide the threshold. For example, FIG. 8 may be referenced for functions of the false alarm control unit 713.

In operation 704, the base station 110 may perform coherent summation on the output preamble signal. For example, C symbols may be accumulated through the coherent summation. As C symbols are accumulated out of a total of S symbols, (S/C) symbols may be outputted. Here, $C$ may be selected from values that make (S/C) an integer. According to an embodiment, the operation 704 may be performed by the DU 210 of the base station 110 by a specific type of function split (e.g., option 7-2 and 7-2x). However, according to another embodiment, the operation 704 may be performed by the RU 220 of the base station 110 by another type of function split.

In operation 705, the base station 110 may perform decorrelation. For example, the preamble sequence may include a ZC sequence. The base station 110 may perform decorrelation on the sequence according to the operation 704 based on the ZC sequence. According to an embodiment, the operation 705 may be performed by the DU 210 of the base station 110 by a specific type of function split (e.g., option 7-2 or 7-2x). However, according to another embodiment, the operation 705 may be performed by the RU 220 of the base station 110 by another type of function split.

In operation 706, the base station 110 may perform an IFFT operation. The IFFT operation may be performed to convert a frequency domain signal into a time domain signal. For example, a length for the IFFT may be $N_{IFFT}$. According to an embodiment, the operation 706 may be performed by the DU 210 of the base station 110 by a specific type of function split (e.g., option 7-2 or 7-2x). However, according to another embodiment, the operation 706 may be performed by the RU 220 of the base station 110 by another type of function split.

In operation 707, the base station 110 may calculate power. For example, the base station 110 may calculate power of each sample through the squared absolute value of an obtained complex number. According to an embodiment, the operation 707 may be performed by the DU 210 of the base station 110 by a specific type of function split (e.g., option 7-2 or 7-2x). However, according to another embodiment, the operation 707 may be performed by the RU 220 of the base station 110 by another type of function split.

In operation 708, the base station 110 may perform noise normalization. The base station 110 may estimate noise. The base station 110 may perform normalization based on the estimated noise. According to an embodiment, the operation 708 may be performed by the DU 210 of the base station 110 by a specific type of function split (e.g., option 7-2 or 7-2x). However, according to another embodiment, the operation 708 may also be performed by the RU 220 of the base station 110 by another type of function split.

In operation 709, the base station 110 may add power calculated for each antenna. According to an embodiment, the operation 709 may be performed by the DU 210 of the base station 110 by a specific type of function split (e.g., option 7-2 or 7-2x). However, according to another embodiment, the operation 709 may be performed by the RU 220 of the base station 110 by another type of function split.

In operation 710, the base station 110 may perform non-coherent summation. For example, each of (S/C) symbols may have $N_{IFFT}$ samples. As (S/C) symbols are accumulated, the base station 110 may obtain $N_{IFFT}$ power values. According to an embodiment, the operation 710 may be performed by the DU 210 of the base station 110 by a specific type of function split (e.g., option 7-2 or 7-2x). However, according to another embodiment, the operation 710 may be performed by the RU 220 of the base station 110 by another type of function split.

The operations 704 to 710 may be performed repeatedly for the number Q of preamble sequences.

The base station 110 may include a profiler 711. For example, the DU 210 of the base station 110 may include the profiler 711. The profiler 711 may receive output power for each preamble sequence. The profiler 711 may perform a function of calculating power (e.g., maximum power) and delay (e.g., a sample index having the maximum power) for each preamble index (e.g., a cyclic shift (CS) zone in the preamble sequence).

The base station 110 may include a detector unit 712. For example, the DU 210 of the base station 110 may include the detector unit 712. The detector unit 712 may compare the power with a threshold for each preamble index. The detector unit 712 may determine whether a random access signal is detected by comparing the power with the threshold. For example, if the power exceeds the threshold, the detector unit 712 may determine that the random access signal is detected. If the power does not exceed the threshold, the detector unit 712 may determine that the random access signal is not detected. Although not illustrated in FIG. 7, the base station 110 may transmit a random access response to a terminal (e.g., the terminal 120) based on the detected random access signal. In addition, the base station 110 may determine a time offset (e.g., timing advance (TA)) based on the detected random access signal. In addition, the base station 110 may identify a frequency offset based on the detected random access signal.

As described above, a distributed network may be used in implementing operations of the base station 110. As a cell radius of the base station significantly decreases, the number of RUs required to be installed has further increased. In a 5G communication system, the amount of transmitted data has increased by up to ten times, resulting in a substantial increase in the transmission capacity of a wired network transmitted to the fronthaul. Due to the above-described factors, installation cost of the wired network in the 5G communication system may increase significantly. Therefore, in order to reduce the transmission capacity of the wired network and decrease the installation cost of the wired network, a 'function split' may be used, in which some functions of a DU modem are offloaded to an RU to reduce the transmission capacity of the fronthaul.

To reduce the load on the DU, a role of the RU, which conventionally only handles RF functions, may be extended to some functions of a physical layer. As the RU performs functions of a higher layer, throughput of the RU increases, which increases transmission bandwidth at the fronthaul, and at the same time, the delay time requirement constraint due to response processing may decrease. Meanwhile, as the RU performs functions of a higher layer, virtualization gain decreases, and a size, weight, and cost of the RU increase. Considering trade-offs between the above-described advantages and disadvantages, it is required to implement an optimal function split.

Based on function splits in the physical layer, whether the operations described in FIG. 7 are performed by the DU 210 or the RU 220 may be determined. For example, in a case of downlink (DL) which transmits a signal to a terminal through a wireless network, the base station 110 may sequentially perform channel encoding/scrambling, modulation, layer mapping, antenna mapping, RE mapping, digital beamforming (e.g., precoding), iFFT conversion/CP insertion, and RF conversion. In a case of uplink (UL) which receives a signal from the terminal through the wireless network, the base station 110 may sequentially perform RF conversion, FFT conversion/CP removal, digital beamforming (pre-combining), RE demapping, channel estimation, layer demapping, demodulation, and decoding/descrambling. The separation for uplink functions and downlink functions may be defined in various types by the needs and discussions in standards, among vendors, and the like, according to the trade-offs described above.

According to an embodiment, in the UL, the RU 220 may perform CP removal (e.g., the operation 701), FFT conversion (e.g., the operation 702), and digital beamforming, and the DU 210 may perform PHY functions (e.g., subcarrier demapping (e.g., the operation 703)), channel estimation, IFFT (e.g., the operation 706), detection (e.g., the detector unit 712), and the like, after digital beamforming.

According to another embodiment, in the UL, the RU 220 may change an RF signal to a digital signal, and the DU 210 may perform CP removal (e.g., the operation 701), FFT conversion (e.g., the operation 702), digital beamforming, subcarrier demapping (e.g., the operation 703), channel estimation, IFFT (e.g., the operation 706), detection (e.g., the detector unit 712), and the like, for the digital signal.

FIG. 8 illustrates an example of false alarm control. FIG. 8 illustrates functional components of the false alarm control unit 713 of FIG. 7. According to an embodiment, the false alarm control may be performed at a base station 110. For example, operations for the false alarm control may be performed by a DU 210 of the base station 110. A term such as '... unit', '... device', and the like, used hereinafter, may refer to a unit that processes at least one function or operation, and may be implemented as hardware, software, or a combination of hardware and software.

Referring to FIG. 8, in operation 801, the base station 110 may obtain a correlation matrix. The base station 110 may receive a preamble signal ( $\mathbf{y[s,k]} = \begin{bmatrix} \mathbf{y_0[s,k]} \\ \vdots \\ \mathbf{y_{A-1}[s,k]} \end{bmatrix}$ ). The preamble signal may include a preamble signal for each antenna. The base station 110 may obtain the correlation matrix based on the preamble signal. The base station 110 may obtain the correlation matrix through a correlation calculation between antennas. For example, the base station 110 may obtain the correlation matrix based on the following equation.

【Equation 4】

$$R[s,m] = \frac{1}{N(m)} \sum_{k=SumN(m-1)}^{SumN(m-1)+N(m)-1} y[s,k]y[s,k]^H$$

**R[s,m]** indicates a correlation matrix. **N(m)** indicates the number of subcarriers used in the calculation of the m correlation matrix block (m = 0~M - 1, where M is the number of correlation matrix blocks). SumN(m) is given by the following equation.

【Equation 5】

$$\mathbf{SumN(m)} = \sum_{x=0}^{m} \mathbf{N(x)} = \mathbf{SumN(m-1)} + \mathbf{N(m)}$$

SumN(-1)=0, and SumN(M - 1) is L$_{RA}$ which is a length of a preamble sequence.

In operation 802, the base station 110 may perform interference measurement. The base station 110 may perform the interference measurement based on the correlation matrix. The base station 110 may measure interference magnitude based on each element of the correlation matrix. The base station 110 may obtain the interference magnitude by applying a designated function to the correlation matrix. For example, the base station 110 may measure the interference magnitude based on the following equation.

【Equation 6】

$$\mathbf{w_{int}[s,m]} = f_{int}(\mathbf{R[s,m]})$$

As interference increases, the correlation between antennas increases, and the absolute value of an off-diagonal element of **R[s,m]** increases. $f_{int}$ indicates the designated function.

Various methods may be used for calculating the interference magnitude. For example, the interference magnitude may be determined based on the following equation.

【Equation 7】

$$w_{int}[s,m] = \frac{\sqrt{\sum_{i=0}^{A-1}\sum_{j=0}^{A-1}|r[s,m]_{i,j}|^2}}{\sum_{i=0}^{A-1} r[s,m]_{i,i}}$$

For another example, the interference magnitude may be determined based on the following equation.

【Equation 8】

$$w_{int}[s,m] = \frac{\sqrt{\sum_{i=0}^{A-1}\sum_{j=0,j\neq i}^{A-1}|r[s,m]_{i,j}|^2}}{\sum_{i=0}^{A-1} r[s,m]_{i,i}}$$

For still another example, the interference magnitude may be determined based on the following equation.

【Equation 9】

$$w_{int}[s,m] = \frac{\sum_{i=0}^{A-1}\sum_{j=0,j\neq i}^{A-1}|r[s,m]_{i,j}|}{\sum \frac{A-1}{i=0} r[s,m]_{i,i}}$$

$r[s,m]_{i,j}$ indicates an element in the $i^{th}$ row and $j^{th}$ column of the correlation matrix (**R[s,m]**), i.e., the (i,j) element.

In operation 803, the base station 110 may perform interference control. The base station 110 may perform the interference control based on the correlation matrix. The base station 110 may perform the interference control based on the interference magnitude derived through the operation 802. The base station 110 may perform the interference control based on the correlation matrix and the interference magnitude. The base station 110 may output an output preamble

signal (e.g., $\mathbf{y_w}[s,k] = \begin{bmatrix} y_{w,0}[s,k] \\ \vdots \\ y_{w,A-1}[s,k] \end{bmatrix}$ ) by performing the interference control on the preamble signal (e.g.,

$\mathbf{y}[s,k] = \begin{bmatrix} y_0[s,k] \\ \vdots \\ y_{A-1}[s,k] \end{bmatrix}$ ).

In operation 804, the base station 110 may perform a threshold calculation. The threshold may include a threshold for determining whether a random access signal is detected in a received signal. The threshold may be used to determine whether a random access preamble is detected. The base station 110 may calculate the threshold based on the interference magnitude ($w_{int}[s, m]$) obtained in the operation 802. The threshold derived in the operation 804 may be used, through comparison with power for each preamble index, to determine whether a sequence corresponding to the preamble index is detected. If a sequence corresponding to the preamble index is detected, the base station 110 may determine that a random access signal is included in the received signals.

For example, the base station 110 may calculate the threshold based on the following equation.

【Equation 10】

$$TH_{prach} = f_{prach}(w_{int}[0,0], ..., w_{int}[S-1, M-1])$$

$TH_{prach}$ indicates the threshold and $f_{prach}(x)$ indicates a function defined to indicate a threshold for input x.

According to an embodiment, the function may be determined based on the inputted interference magnitude ($w_{int}[s, m]$) and an analysis result or a simulation result of a trend of a false alarm. The function may include an approximated function to indicate the trend of the false alarm. In addition, for example, the function may be determined based on the following equation.

【Equation 11】

$$TH_{prach} = f_{prach(}W_{int}[0,0], ..., W_{int}[S-1, M-1])$$

$$= \begin{cases} TH_{step2} \ for \ INTest \geq INT1 \\ TH_{step1} \ for \ INT0 \leq INTest < INT1 \\ TH_{step0} \ for \ INTest < INT0 \end{cases}$$

The threshold may be determined based on the interference magnitude. For example, according to a range of the interference magnitude, the threshold may be determined as one of $TH_{step0}$, $TH_{step1}$, or $TH_{step2}$. For example, for the calculation of Equation 11, *INTest* may be defined. Here, *INTest* may mean a representative value for 9 symbols and M correlation matrix blocks.

*INTest* may be determined based on the following equation.

【Equation 12】

$$INTest = \frac{1}{S \cdot M} \sum_{s=0}^{S-1} \sum_{m=0}^{M-1} w_{int}[s, m]$$

【Equation 13】

$$INTest = \sum_{s=0}^{S-1} \sum_{m=0}^{M-1} ind[s,m] , ind[s,m] = \begin{cases} 1 \; if \; (w_{int}[s,m] > TH_{int}) \\ 0, \quad otherwise \end{cases}$$

$TH_{int}$ is a pre-defined value and may be a constant or obtained by the base station 110 before the calculation. For example, $TH_{int}$ is a threshold (hereinafter, an interference threshold) for determining the degree of interference. The interference threshold is distinguished from a threshold (i.e., a detection threshold) for determining whether a random access signal is detected at a detector unit 712.

Meanwhile, Equations 12 to 13 are examples, and of course, another calculation may be performed to determine the representative value for $S$ symbols and M correlation matrix blocks.

In Equation 11, the range of the threshold is divided and represented into three stages, but embodiments of the present disclosure are not limited thereto. The threshold may be set in two stages or four or more stages in consideration of the capability or complexity of the base station 110 (or the DU 210). For example, in the two-stage case, the threshold may be set to one of two values according to the range of the interference magnitude. For another example, in an N-stage (where N is an integer greater than or equal to 4), the threshold may be set to one of N values according to the range of the interference magnitude.

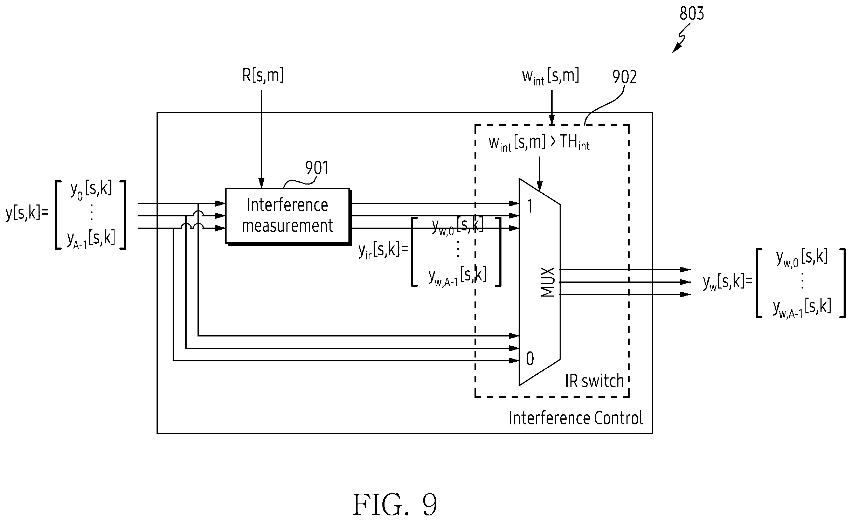

FIG. 9 illustrates an example of interference control. FIG. 9 shows functional components of the operation 803 of FIG. 8 for interference control. According to an embodiment, the interference control may be performed at a base station 110. For example, the operations for the interference control may be performed by a DU 210 of the base station 110. A term such as '... unit', '... device', and the like, used hereinafter, may refer to a unit that processes at least one function or operation, and may be implemented as hardware, software, or a combination of hardware and software.

Referring to FIG. 9, in operation 901, the base station 110 may perform interference control. The interference control may include interference rejection and/or interference mitigation. The base station 110 may obtain a preamble signal (e.g., $y[s,k] = \begin{bmatrix} y_0[s,k] \\ \vdots \\ y_{A-1}[s,k] \end{bmatrix}$ ). The base station 110 may obtain a correlation matrix (e.g., $R[s, m]$). The base station 110 may obtain interference magnitude (e.g., $w_{int}[s, m]$). The base station 110 may perform interference control based on the preamble signal, the correlation matrix, and the interference magnitude. The base station 110 may determine an interference-control function for the interference control. For example, a functional block of the operation 901 for the interference control may be referred to as an interference control unit.

For example, the correlation matrix may be decomposed based on the following equation.

【Equation 14】

$$R[s,m] = L[s, m]L[s, m]^H$$

$L[s,m]$ means a base matrix obtained based on Cholesky decomposition.

The base station 110 may determine the interference-control function based on the basic matrix. For example, the interference-control function may include multiplication by an interference control matrix. For example, the interference control matrix may be determined based on the following equation. The multiplication by the interference control matrix is intended to mitigate an interference component between antennas through enhancement of a diagonal component, and may correspond to whitening. The following matrix may be referred to as a whitening matrix.

【Equation 15】

$$\mathbf{W[s,m]} = \mathbf{L[s,m]^{-1}}$$

The base station 110 may apply the interference-control function to the preamble signal (e.g.,

$$\mathbf{y[s,k]} = \begin{bmatrix} \mathbf{y_0[s,k]} \\ \vdots \\ \mathbf{y_{A-1}[s,k]} \end{bmatrix}$$

). For example, the base station 110 may perform a calculation of multiplying the interference control matrix by the preamble signal. The base station 110 may remove or mitigate an interference component in a subcarrier corresponding to the $m^{th}$ correlation matrix based on the interference control matrix. The base station 110 may obtain a signal (hereinafter, a modified preamble signal) with the interference component removed or mitigated through the calculation.

【Equation 16】

$$y_{ir}[s,k] = W[s,m]y[s,k], \quad k = SumN(m-1) \sim SumN(m-1) + N(m) - 1$$

$y_{ir}[s, k]$ indicates the modified preamble signal and $\mathbf{W[s,m]}$ indicates the interference control matrix. $y[s, k]$ indicates the preamble signal.

In operation 902, the base station 110 may determine an output preamble signal by comparing the interference magnitude with a threshold. The base station 110 may determine whether the interference magnitude exceeds or does not exceed the threshold. The base station 110 may determine whether an interference component of received signals exceeds the threshold (hereinafter, an interference threshold). In a case that the interference component exceeds the threshold, the base station 110 may output the modified preamble signal. In a case that the interference component does not exceed the threshold, the base station 110 may output the preamble signal. In other words, if the interference component does not exceed the threshold, the base station 110 may output the preamble signal without an interference control calculation (e.g., the operation 901). As a result, computational complexity may be reduced. For example, a functional block of the operation 902 for determining the output preamble signal may be referred to as an interference rejection (IR) switch.

For example, the base station 110 may determine the output preamble signal based on the following equation.

【Equation 17】

$$y_w[s,k] = \begin{cases} Y_{ir}[s,k], if \ w_{int}[s,m] > TH_{int} \\ Y[s,k], \quad otherwise \end{cases}$$

$y_w[s, k]$ indicates the output preamble signal, $y_{ir}[s, k]$ indicates the modified preamble signal, $y[s, k]$ and indicates the preamble signal. $w_{int}[s, m]$ indicates interference magnitude at the $(s+1)^{th}$ symbol and the $(m+1)^{th}$ correlation matrix block, and $TH_{int}$ is an interference threshold for determining whether there is interference. The interference threshold is distinct from a threshold (i.e., a detection threshold) in the detector unit 712 to determine whether a random access signal has been detected. As an implementation example, the base station 110 may include a multiplexer (MUX) that takes the modified preamble signal (e.g., $y_{ir}[s, k]$) and the preamble signal (e.g., $y[s, k]$) as an input and $y_w[s, k]$ as an output for the calculation of Equation 17.

In FIG. 9, to indicate the functional blocks, it is described that the operation of the interference control (e.g., the operation 901) is performed after a comparison operation (e.g., the operation 902) of the interference magnitude and the interference threshold, but embodiments of the present disclosure are not limited thereto. According to another embodiment, the operation of the interference control may be performed after determining the comparison between the interference and the interference threshold, to reduce computational complexity. For example, the operation of the interference control may be performed only if the interference magnitude exceeds the interference threshold. For example, if the interference magnitude (e.g., $w_{int}[s, m]$) is smaller than the interference threshold, the base station 110 may output the preamble signal ($y[s, k]$) without performing any additional interference control operation. The base station 110 may perform a calculation for the operation 704 based on the preamble signal. For example, after determining whether the interference magnitude (e.g., $w_{int}[s, m]$) is large, if the interference magnitude exceeds the interference threshold, the base station 110 may perform the interference control operation (e.g., the operation 901). The base station 110 may output the

modified preamble signal $y_{ir}[s, k]$.

In a communication system using an OFDM-based PRACH preamble, interference may occur in the PRACH RB region by an adjacent UL signal of a cell or a UL signal of another cell. The present disclosure proposes a method of operating the PRACH preamble while maintaining a TFA required by the system, in such an interference environment. In other words, in an environment without interference, the absence of interference is detected, and may operate in the same manner as the conventional method. By this, a missed detection performance is maintained while maintaining the TFA as usual. In addition, by measuring the interference magnitude even in an environment with interference, a function of controlling a false alarm may be operated through the measured interference. The method proposed by the present disclosure provides significant performance gain in the missed detection performance in interference environment compared to conventional technologies.

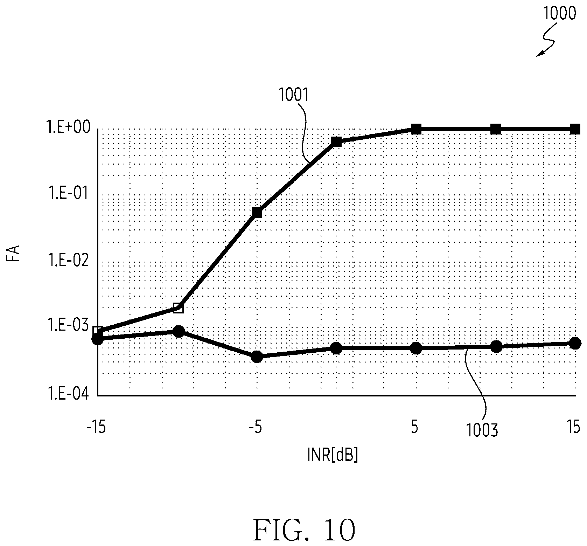

FIG. 10 illustrates an example of performance of false alarm control. The false alarm control may include the interference control and the threshold control described in FIGS. 7 to 9. For example, it is assumed that a random access signal is transmitted according to a preamble format C0, and the receiver receives the random access signal through eight antennas.

Referring to FIG. 10, a graph 1000 indicates an error rate compared to interference intensity. The horizontal axis of the graph 1000 indicates the interference intensity (e.g., unit: decibel), and the vertical axis indicates the error rate, i.e., a ratio of false alarm. A line 1001 indicates performance of a legacy PRACH detector. In the line 1001, it may be confirmed that the false alarm rapidly increases when the interference intensity is greater than or equal to approximately -10 dB. Particularly, when the interference intensity is greater than or equal to 0 dB, it may be identified that the false alarm value is close to 1.

A line 1003 indicates performance of a PRACH detector performing false alarm control according to embodiments of the present disclosure. When the interference intensity is low, the two PRACH detectors indicate similar performance, but as the interference intensity increases, the performance difference between the two PRACH detectors may increase. In the line 1003, regardless of interference magnitude, it may be confirmed that the false alarm rate is maintained in a certain range.

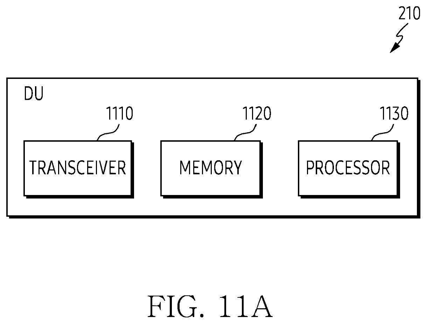

FIG. 11A illustrates a functional configuration of a DU (e.g., the DU 210) according to embodiments. A configuration exemplified in FIG. 11A, which is as a part of a base station, may be understood as a configuration of the DU 210 of FIG. 11A. Hereinafter, the terms '...unit' and '...er' used below refer to a unit processing at least one function or operation, which may be implemented by hardware or software, or a combination of hardware and software.

Referring to FIG. 11A, a DU 210 includes a transceiver 1110, memory 1120, and a processor 1130.

The transceiver 1110 may perform functions for transmitting and receiving a signal in a wired communication environment. The transceiver 1110 may include a wired interface for controlling a direct device-to-device connection through a transmission medium (e.g., copper wire, optical fiber). For example, the transceiver 1110 may transmit an electrical signal to another device through a copper wire or perform conversion between an electrical signal and an optical signal. The DU 210 may communicate with a radio unit (RU) through the transceiver 1110.

The transceiver 1110 may also perform functions for transmitting and receiving a signal in a wireless communication environment. For example, the transceiver 1110 may perform a conversion function between a baseband signal and a bit string according to a physical layer specification of a system. For example, upon transmitting data, the transceiver 1110 generates complex-valued symbols by encoding and modulating a transmission bit string. In addition, upon receiving data, the transceiver 1110 restores a received bit string by demodulating and decoding a baseband signal. In addition, the transceiver 1110 may include a plurality of transmission/reception paths.

The transceiver 1110 may transmit and receive a signal. For example, the transceiver 1110 may transmit a management plane (M-plane) message. For example, the transceiver 1110 may transmit a synchronization plane (S-plane) message. For example, the transceiver 1110 may transmit a control plane (C-plane) message. For example, the transceiver 1110 may transmit a user plane (U-plane) message. For example, the transceiver 1110 may receive the U-plane message. Although only the transceiver 1110 is illustrated in FIG. 11A, the DU 210 may include two or more transceivers according to another implementation.

The transceiver 1110 transmits and receives a signal as described above. Accordingly, all or some of the transceiver 1110 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 1110. According to an embodiment, the transceiver 1110 may obtain signals on which physical layer processing has been performed, from the RU (e.g., an RU 220). For example, the transceiver 1110 may obtain a signal (e.g., a frequency domain signal) on which CP removal and FFT have been performed for the received signals.

Although not illustrated in FIG. 11A, the transceiver 1110 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 1120 stores a basic program, an application program, and data such as configuration information for an operation of the DU 210. The memory 1120 may be referred to as a storage unit. The memory 1120 may be configured with a volatile memory, a nonvolatile memory, or a combination of the volatile memory and the nonvolatile memory. In addition, the memory 1120 provides stored data according to a request from the processor 1130. According to an embodiment, the memory 1120 may store one or more thresholds (e.g., $TH_{step0}$, $TH_{step1}$, or $TH_{step2}$) for detecting a random access signal (e.g., PRACH preamble) of the present disclosure. For example, the memory 1120 may store a threshold (e.g., $TH_{int}$) for determining the degree of interference.

The processor 1130 controls overall operations of the DU 210. The processor 1180 may be referred to as a control unit. For example, the processor 1130 transmits and receives a signal through the transceiver 1110 (or through a backhaul communication unit). In addition, the processor 1130 writes and reads data in the memory 1120. In addition, the processor 1130 may perform functions of a protocol stack required in a communication standard. Although only the processor 1130 is illustrated in FIG. 11A, the DU 210 may include two or more processors according to another implementation.

According to an embodiment, the processor 1130 may perform the physical layer processing on signals received from the RU (e.g., the RU 220). For example, the processor 1130 may perform subcarrier demapping (RE demapping) on the received signals. For example, the processor 1130 may perform channel estimation on the received signals. For example, the processor 1130 may perform IFFT on the received signals. For example, the processor 1130 may perform PRACH detection (e.g., an operation of a detector unit 712) on the received signals.

According to an embodiment, the processor 1130 may perform interference control. For example, the processor 1130 may perform interference control based on a preamble signal. For example, the processor 1130 may perform interference control based on a correlation matrix. For example, the processor 1130 may perform interference control based on interference magnitude. For example, the processor 1130 may perform interference control based on the preamble signal, the correlation matrix, and the interference magnitude. In addition, according to an embodiment, the processor 1130 may determine a detection threshold. For example, the processor 1130 may determine the detection threshold based on the interference magnitude. For example, the processor 1130 may determine the detection threshold based on a simulation result or an analysis result for a false alarm rate.

A configuration of the DU 210 illustrated in FIG. 11A is merely an example, and the example of the DU performing embodiments of the present disclosure is not limited to the configuration illustrated in FIG. 11A. In some embodiments, certain configurations may be added, deleted, or changed.

Embodiments of the present disclosure may effectively control a false alarm in an environment in which interference (e.g., interference by PUSCH of FIGS. 6A and 6B) exists in the PRACH resource region (e.g., RBs allocated for PRACH) in an OFDM-based mobile communication system. A technique for controlling the required false alarm rate through detection threshold and interference control from the received signals has been described.

As the interference-induced influence in the environment decreases, an error may be detected due to an error of the correlation matrix. Therefore, as the interference component decreases, a base station 110 may guarantee reception performance of random access preamble by not performing an interference control operation. In addition, in a case that the interference component is large, the base station 110 may obtain reception performance gain by performing the interference control operation.

The effects that can be obtained from the present disclosure are not limited to those described above, and any other effects not mentioned herein will be clearly understood by those having ordinary knowledge in the art to which the present disclosure belongs, from the following description.

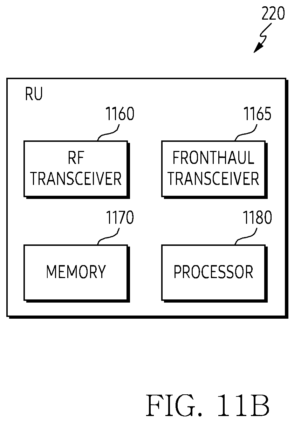

FIG. 11B illustrates a functional configuration of an RU (e.g., the RU 220) according to embodiments. A configuration exemplified in FIG. 11B, which is as a part of a base station, may be understood as a configuration of the RU 220 of FIG. 2. Hereinafter, the terms '...unit' and '...er' used below refer to a unit processing at least one function or operation, which may be implemented by hardware or software, or a combination of hardware and software.

Referring to FIG. 11B, the RU 220 includes an RF transceiver 1160, a fronthaul transceiver 1165, memory 1170, and a processor 1180.

The RF transceiver 1160 performs functions for transmitting and receiving a signal through a wireless channel. For example, the RF transceiver 1160 up-converts a baseband signal into an RF band signal and then transmits it through an antenna, and down-converts an RF band signal received through the antenna into a baseband signal. For example, the RF transceiver 1160 may include a transmission filter, a reception filter, an amplifier, a mixer, an oscillator, a DAC, an ADC.

The RF transceiver 1160 may include a plurality of transmission/reception paths. Furthermore, the RF transceiver 1160 may include an antenna unit. The RF transceiver 1160 may include at least one antenna array composed of a plurality of antenna elements. In terms of hardware, the RF transceiver 1160 may be composed of a digital circuit and an analog circuit (e.g., a radio frequency integrated circuit (RFIC)). Herein, the digital circuit and the analog circuit may be implemented as a single package. In addition, the RF transceiver 1160 may include a plurality of RF chains. The RF transceiver 1160 may perform beamforming. In order to provide directivity to a signal to be transmitted and received according to the setting of the processor 1180, the RF transceiver 1160 may apply beamforming weights to the signal.

According to an embodiment, the RF transceiver 1160 may provide a plurality of antennas.

According to an embodiment, the RF transceiver 1160 may transmit and receive a signal on a radio access network. For example, the RF transceiver 1160 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 1160 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). According to an embodiment, the RF transceiver 1160 may receive signals including a random access signal through a plurality of antennas provided in the RF transceiver 1160. Although only the RF transceiver 1160 is illustrated in FIG. 11B, the RU 220 may include two or more RF transceivers according to another implementation.

The fronthaul transceiver 1165 may transmit and receive a signal. According to an embodiment, the fronthaul transceiver 1165 may transmit and receive a signal on a fronthaul interface. For example, the fronthaul transceiver 1165 may receive a management plane (M-plane) message. For example, the fronthaul transceiver 1165 may receive a synchronization plane (S-plane) message. For example, the fronthaul transceiver 1165 may receive a control plane (C-plane) message. For example, the fronthaul transceiver 1165 may transmit a user plane (U-plane) message. For example, the fronthaul transceiver 1165 may receive a U-plane message. According to an embodiment, the fronthaul transceiver 1165 may transmit a signal (e.g., a frequency domain signal) on which CP removal and FFT have been performed, to the DU (e.g., the DU 210). Although only the fronthaul transceiver 1165 is illustrated in FIG. 11B, the RU 220 may include two or more fronthaul transceivers according to another implementation.

As described above, the RF transceiver 1160 and the fronthaul transceiver 1165 transmit and receive a signal. Accordingly, all or some of the RF transceiver 1160 and the fronthaul transceiver 1165 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 1160. In the following description, transmission and reception performed through a wireless channel are used to the meaning including that the processing as described above is performed by the RF transceiver 1160.

The memory 1170 stores a basic program, an application program, and data such as configuration information for an operation of the RU 220. The memory 1170 may be referred to as a storage unit. The memory 1170 may be configured with a volatile memory, a nonvolatile memory, or a combination of the volatile memory and the nonvolatile memory. In addition, the memory 1170 provides stored data according to a request from the processor 1180. According to an embodiment, the memory 1170 may include a memory for a condition, a command, or a setting value related to an SRS transmission scheme.

The processor 1180 controls overall operations of the RU 220. The processor 1180 may be referred to as a control unit. For example, the processor 1180 transmits and receives a signal through the RF transceiver 1160 or the fronthaul transceiver 1165. In addition, the processor 1180 writes and reads data in the memory 1170. In addition, the processor 1180 may perform functions of a protocol stack required by a communication standard. Although only the processor 1180 is illustrated in FIG. 11B, the RU 220 may include two or more processors according to another implementation. The processor 1180, which is an instruction set or code stored in the memory 1170, may be an instruction/code at least temporarily resided in the processor 1180 or a storage space storing instruction/code, or part of circuitry constituting the processor 1180. In addition, the processor 1180 may include various modules for performing communication. The processor 1180 may control the RU 220 to perform operations according to embodiments to be described later.

A configuration of the RU 220 illustrated in FIG. 11B is only an example, and an example of the RU performing the embodiments of the present disclosure is not limited to the configuration illustrated in FIG. 11B. In some embodiment, some configurations may be added, deleted, or changed.

In embodiments, a method performed by a base station is provided. The method may comprise obtaining preamble signals related to signals received through a plurality of antennas of a radio unit (RU) based on a physical random access channel (PRACH) region. The method may comprise obtaining interference information from a correlation matrix of the preamble signals. The method may comprise determining a detection threshold for preamble detection based on the interference information. The method may comprise determining whether a PRACH signal is detected based on comparing output power determined based on the preamble signals with the detection threshold. The output power may comprise power for modified preamble signals changed based on the preamble signals or the interference information.

According to an embodiment, the method may comprise determining that the PRACH signal is detected in a case that the output power exceeds the detection threshold. The method may comprise determining that the PRACH signal is not detected in a case that the output power does not exceed the detection threshold.

According to an embodiment, the detection threshold may be determined according to interference magnitude of the preamble signals. The interference magnitude may be determined from the correlation matrix.

According to an embodiment, the detection threshold may correspond to a first value in a case that an indicator value corresponding to the interference magnitude of the preamble signals is within a first range. The detection threshold corresponds to a second value different from the first value, in a case that the indicator value corresponding to the interference magnitude of the preamble signals is within a second range.

According to an embodiment, the PRACH region may correspond to a frequency region allocated for transmission of random access preambles.

According to an embodiment, determining whether the PRACH signal is detected may include determining whether the interference information exceeds an interference threshold.

Determining whether the PRACH signal is detected may include determining the power for the modified preamble signals in a case that the interference information exceeds the interference threshold. Determining whether the PRACH signal is detected may include determining power for the preamble signals in a case that the interference information does not exceed the interference threshold.

According to an embodiment, the modified preamble signals may be determined based on the preamble signals, the correlation matrix, and the interference information.

According to an embodiment, the modified preamble signals may be obtained by applying an interference-control function to the preamble signals. The interference-control function may include multiplication by a whitening matrix determined based on the correlation matrix.

According to an embodiment, the correlation matrix may be determined based on the number of the plurality of antennas, the number of a plurality of correlation blocks, the number of subcarriers included in each block, and a result of a correlation calculation for the PRACH signals.

According to an embodiment, the method may include transmitting a random access response signal to a terminal based on detection of the PRACH signal.

In embodiments, an electronic device (e.g., a DU 210) for a base station is provided. The electronic device may include memory, at least one transceiver, and at least one processor coupled to the memory and the at least one transceiver. The at least one processor may be configured to obtain preamble signals related to signals received through a plurality of antennas based on a physical random access channel (PRACH) region. The at least one processor may be configured to obtain interference information from a correlation matrix of the preamble signals. The at least one processor may be configured to determine a detection threshold for preamble detection based on the interference information. The at least one processor may be configured to determine whether a PRACH signal is detected based on comparing output power determined based on the preamble signals with the detection threshold. The output power may comprise power for modified preamble signals changed based on the preamble signals or the interference information.

According to an embodiment, the at least one processor may be configured to determine that the PRACH signal is detected in a case that the output power exceeds the detection threshold. The at least one processor may be configured to determine that the PRACH signal is not detected in a case that the output power does not exceed the detection threshold.

According to an embodiment, the detection threshold may be determined according to interference magnitude of the preamble signals. The interference magnitude may be determined from the correlation matrix.

According to an embodiment, the detection threshold may correspond to a first value in a case that an indicator value corresponding to the interference magnitude of the preamble signals is within a first range. The detection threshold may correspond to a second value different from the first value in a case that the indicator value corresponding to the interference magnitude of the preamble signals is within a second range.

According to an embodiment, the PRACH region may correspond to a frequency region allocated for transmission of random access preamble.

According to an embodiment, the at least one processor may be configured to determine whether the interference information exceeds an interference threshold, in order to determine whether the PRACH signal is detected. The at least one processor may be configured to determine the power for the modified preamble signals in a case that the interference information exceeds the interference threshold, in order to determine whether the PRACH signal is detected. The at least one processor may be configured to determine power for the preamble signals in a case that the interference information does not exceed the interference threshold, in order to determine whether the PRACH signal is detected.

According to an embodiment, the modified preamble signals may be determined based on the preamble signals, the correlation matrix, and the interference information.

According to an embodiment, the modified preamble signals may be obtained by applying an interference-control function to the preamble signals. The interference-control function may include multiplication by a whitening matrix determined based on the correlation matrix.

According to an embodiment, the correlation matrix may be determined based on the number of the plurality of antennas, the number of a plurality of correlation blocks, the number of subcarriers included in each block, and a result of a correlation calculation for the PRACH signals.

According to an embodiment, the at least one processor may be configured to transmit a random access response signal to a terminal based on detection of the PRACH signal.

In embodiments, a digital unit (DU) is provided. The DU may comprise memory storing instructions and at least one processor. The instructions, when executed by the at least one processor, may cause the electronic device to obtain preamble signals related to signals received through a plurality of antennas of a radio unit (RU) based on a physical random access channel (PRACH) region, obtain interference information from a correlation matrix of the preamble signals, determine a detection threshold for preamble detection based on the interference information, and determine whether a PRACH signal is detected based on comparing output power determined based on the preamble signals with the detection threshold. The output power may comprise power for modified preamble signals changed based on the preamble signals or the interference information.

According to an embodiment, the instructions, when executed by the one processor, may cause the DU to determine that the PRACH signal is detected in a case that the output power exceeds the detection threshold, and to determine that the PRACH signal is not detected in a case that the output power does not exceed the detection threshold.

According to an embodiment, the detection threshold may be determined according to interference magnitude of the preamble signals, and the interference magnitude may be determined from the correlation matrix.

According to an embodiment, the detection threshold may correspond to a first value in a case that an indicator value corresponding to the interference magnitude of the preamble signals is within a first range, and may correspond to a second value different from the first value in a case that the indicator value corresponding to the interference magnitude of the preamble signals is within a second range.

According to an embodiment, the PRACH region may correspond to a frequency region allocated for transmission of random access preamble.

According to an embodiment, the instructions, when executed by the one processor, in order to determine whether the PRACH signal is detected, may cause the DU to determine whether the interference information exceeds an interference threshold, to determine the power for the modified preamble signals in a case that the interference information exceeds the interference threshold, and to determine power for the preamble signals in a case that the interference information does not exceed the interference threshold.

According to an embodiment, the modified preamble signals may be determined based on the preamble signals, the correlation matrix, and the interference information.

According to an embodiment, the modified preamble signals may be obtained by applying an interference-control function to the preamble signals. The interference-control function may include multiplication by a whitening matrix determined based on the correlation matrix.

According to an embodiment, the correlation matrix may be determined based on the number of the plurality of antennas, the number of a plurality of correlation blocks, the number of subcarriers included in each block, and a result of a correlation calculation for the PRACH signals.

According to an embodiment, the instructions, when executed by the processor may cause the DU to transmit a random access response signal to a terminal through at least one transceiver, based on detection of the PRACH signal.

In embodiments, a radio unit (RU) is provided. The RU may comprise memory storing instructions and at least one processor. The instructions, when executed by the at least one processor, may cause the electronic device to obtain preamble signals related to signals received through a plurality of antennas based on a physical random access channel (PRACH) region, obtain interference information from a correlation matrix of the preamble signals, determine a detection threshold for preamble detection based on the interference information, and determine whether a PRACH signal is detected based on comparing output power determined based on the preamble signals with the detection threshold. The output power may comprise power for modified preamble signals changed based on the preamble signals or the interference information.

In embodiments, a non-transitory computer-readable storage medium is provided. The non-transitory computer-readable storage medium may comprise instructions including obtaining preamble signals related to signals received through a plurality of antennas based on a physical random access channel (PRACH) region, obtaining interference information from a correlation matrix of the preamble signals, determining a detection threshold for preamble detection based on the interference information, and determining whether a PRACH signal is detected based on comparing output power determined based on the preamble signals with the detection threshold. The output power may comprise power for modified preamble signals changed based on the preamble signals or the interference information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1.  A digital unit (DU) comprising:

    memory storing instructions; and
    at least one processor,
    wherein the instructions, when executed by the at least one processor, cause the electronic device to:

    obtain preamble signals related to signals received through a plurality of antennas of a radio unit (RU) based on a physical random access channel (PRACH) region;
    obtain interference information from a correlation matrix of the preamble signals;
    determine a detection threshold for preamble detection based on the interference information; and
    determine whether a PRACH signal is detected based on comparing output power determined based on the preamble signals with the detection threshold, and
    wherein the output power comprises power for modified preamble signals changed based on the preamble signals or the interference information.

2.  The DU of claim 1, wherein the instructions, when executed by the processor, cause the DU to:

    in a case that the output power exceeds the detection threshold, determine that the PRACH signal is detected; and
    in a case that the output power does not exceed the detection threshold, determine that the PRACH signal is not detected.

3.  The DU of claim 1,

    wherein the detection threshold is determined according to interference magnitude of the preamble signals, and
    wherein the interference magnitude is determined from the correlation matrix.

4.  The DU of claim 3,

    wherein, in a case that an indicator value corresponding to the interference magnitude of the preamble signals is within a first range, the detection threshold corresponds to a first value,
    and
    wherein, in a case that the indicator value corresponding to the interference magnitude of the preamble signals is within a second range, the detection threshold corresponds to a second value different from the first value.

5.  The DU of claim 1, wherein the PRACH region corresponds to a frequency region allocated for transmission of random access preambles.

6.  The DU of claim 1, wherein the instructions, when executed by the processor, in order to determine whether the PRACH signal is detected, cause the DU to:

    determine whether the interference information exceeds an interference threshold;
    in a case that the interference information exceeds the interference threshold, determine the power for the modified preamble signals; and
    in a case that the interference information does not exceed the interference threshold, determine power for the preamble signals.

7.  The DU of claim 1,
    wherein the modified preamble signals are determined based on the preamble signals, the correlation matrix, and the interference information.

8.  The DU of claim 7,

wherein the modified preamble signals are obtained by applying an interference-control function to the preamble signals, and

wherein the interference-control function includes multiplication by a whitening matrix determined based on the correlation matrix.

9. The DU of claim 1,
wherein the correlation matrix is determined based on the number of the plurality of antennas, the number of a plurality of correlation blocks, the number of subcarriers included in each block, and a result of a correlation calculation for the PRACH signals.

10. The DU of claim 1, wherein the instructions, when executed by the processor, cause the DU to:
transmit a random access response signal to a terminal through at least one transceiver, based on detection of the PRACH signal.

11. A method for receiving signals comprising:

    obtaining preamble signals related to signals received through a plurality of antennas based on a physical random access channel (PRACH) region;
    obtaining interference information from a correlation matrix of the preamble signals;
    determining a detection threshold for preamble detection based on the interference information; and
    determining whether a PRACH signal is detected based on comparing output power determined based on the preamble signals with the detection threshold, and
    wherein the output power comprises power for modified preamble signals changed based on the preamble signals or the interference information.

12. The method of claim 11, further comprising:

    in a case that the output power exceeds the detection threshold, determining that the PRACH signal is detected; and
    in a case that the output power does not exceed the detection threshold, determining that the PRACH signal is not detected.

13. The method of claim 12,

    wherein the detection threshold is determined according to interference magnitude of the preamble signals, and
    wherein the interference magnitude is determined from the correlation matrix.

14. A radio unit (RU) comprising:

    memory storing instructions; and
    at least one processor,
    wherein the instructions, when executed by the at least one processor, cause the electronic device to:

        obtain preamble signals related to signals received through a plurality of antennas based on a physical random access channel (PRACH) region;
        obtain interference information from a correlation matrix of the preamble signals;
        determine a detection threshold for preamble detection based on the interference information; and
        determine whether a PRACH signal is detected based on comparing output power determined based on the preamble signals with the detection threshold, and
        wherein the output power comprises power for modified preamble signals changed based on the preamble signals or the interference information.

15. A non-transitory computer readable storage medium comprising instructions including:

    obtaining preamble signals related to signals received through a plurality of antennas based on a physical random access channel (PRACH) region;
    obtaining interference information from a correlation matrix of the preamble signals;
    determining a detection threshold for preamble detection based on the interference information; and

determining whether a PRACH signal is detected based on comparing output power determined based on the preamble signals with the detection threshold, and

wherein the output power comprises power for modified preamble signals changed based on the preamble signals or the interference information.

FIG. 1

110

210

DU

215

220

RU

FIG. 2

RADIO FRAME (314)

SLOT (306)

$N_{RB}^{DL}$ OR $N_{RB}^{UL}$ SUBCARRIERS (304)

$N_{RB}$ SUBCARRIERS (310)

RESOURCE ELEMENT (312)

RESOURCE BLOCK (308)

$N_{symb}$ OFDM SYMBOLS (302)

FIG. 3

FIG. 4

510

530

| CP (C) (520) | Preamble body (N*S) | | | |
|---|---|---|---|---|
| CP | Psymbol (0) | Psymbol (1) | · · · | Psymbol (S-1) |

Symbol (N)

*Psymbol: Preamble symbol

FIG. 5

FIG. 6A

Cell A                                                Cell B

Guard subcarriers
(2RA subcarriers)

654

651~
PRACH
RBs(12RB)

PRACH RB (139 RA
subcarriers)

653

PUSCH 12 RBs
corresponding
to Cell A
PRACH

Interference from
cell B PUSCH

Guard subcarriers
(3RA subcarriers)

30kHz

652~
PUSCH RB

FIG. 6B

FIG. 7

EP 4 642 109 A1

713

$$y[s,k]=\begin{bmatrix} y_0[s,k] \\ \vdots \\ y_{A-1}[s,k] \end{bmatrix}$$

801 Correlation matrix

$R[s,m]$

802 Interference measurement

$w_{int}[s,m]$

804 Threshold calculator

$TH_{prach}$

803 Interference Control

$$y_w[s,k]=\begin{bmatrix} y_{w,0}[s,k] \\ \vdots \\ y_{w,A-1}[s,k] \end{bmatrix}$$

False alarm Control

FIG. 8

FIG. 9

EP 4 642 109 A1

FIG. 10

210

DU

| TRANSCEIVER 1110 | MEMORY 1120 | PROCESSOR 1130 |

FIG. 11A

220

RU

1160

RF
TRANSCEIVER

1165

FRONTHAUL
TRANSCEIVER

1170

MEMORY

1180

PROCESSOR

FIG. 11B

## INTERNATIONAL SEARCH REPORT

| International application No. |
|---|
| **PCT/KR2023/021175** |

| A. CLASSIFICATION OF SUBJECT MATTER |
|---|
| **H04W 52/32**(2009.01)i; **H04W 52/24**(2009.01)i; **H04W 74/00**(2009.01)i; **H04W 74/08**(2009.01)i |
| According to International Patent Classification (IPC) or to both national classification and IPC |

| B. FIELDS SEARCHED |
|---|
| Minimum documentation searched (classification system followed by classification symbols) |
| H04W 52/32(2009.01); H04B 1/10(2006.01); H04J 3/00(2006.01); H04L 27/06(2006.01); H04L 27/26(2006.01); H04W 72/04(2009.01); H04W 74/08(2009.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: TFA(Target False Alarm), 임계값(threshold), 프리앰블(preamble), PRACH, 상관 행렬(correlation matrix), 출력 전력(output power), 간섭(interference), 검출(detection) |

| C. DOCUMENTS CONSIDERED TO BE RELEVANT | | |
|---|---|---|
| Category* | Citation of document, with indication, where appropriate, of the relevant passages | Relevant to claim No. |
| X | US 2010-0158050 A1 (YANG, Weidong) 24 June 2010 (2010-06-24)<br>See paragraphs [0004]-[0006] and [0069]-[0071]; and claims 1 and 12. | 1-15 |
| A | US 2011-0110240 A1 (BERGQUIST, Gunnar et al.) 12 May 2011 (2011-05-12)<br>See paragraphs [0038]-[0045]. | 1-15 |
| A | US 2017-0359839 A1 (TELEFONAKTIEBOLAGET LM ERICSSON (PUBL)) 14 December 2017 (2017-12-14)<br>See paragraphs [0065]-[0078]. | 1-15 |
| A | US 8831150 B1 (HONG KONG APPLIED SCIENCE AND TECHNOLOGY RESEARCH INSTITUTE COMPANY LIMITED) 09 September 2014 (2014-09-09)<br>See claims 1-9. | 1-15 |
| A | KR 10-2018-0063780 A (SAMSUNG ELECTRONICS CO., LTD.) 12 June 2018 (2018-06-12)<br>See paragraphs [0119]-[0131]; and figure 5. | 1-15 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 April 2024** | **08 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/021175**

| Patent document cited in search report | | | Publication date (day/month/year) | Patent family member(s) | | | Publication date (day/month/year) |
|---|---|---|---|---|---|---|---|
| US | 2010-0158050 | A1 | 24 June 2010 | US | 7843970 | B2 | 30 November 2010 |
| US | 2011-0110240 | A1 | 12 May 2011 | EP | 2245756 | A1 | 03 November 2010 |
| | | | | EP | 2245756 | B1 | 08 April 2015 |
| | | | | US | 8717907 | B2 | 06 May 2014 |
| | | | | WO | 2009-105003 | A1 | 27 August 2009 |
| US | 2017-0359839 | A1 | 14 December 2017 | CN | 107211458 | A | 26 September 2017 |
| | | | | CN | 107211458 | B | 29 January 2021 |
| | | | | EP | 3254521 | A1 | 13 December 2017 |
| | | | | EP | 3254521 | B1 | 28 April 2021 |
| | | | | US | 10420149 | B2 | 17 September 2019 |
| | | | | WO | 2016-123790 | A1 | 11 August 2016 |
| US | 8831150 | B1 | 09 September 2014 | None | | | |
| KR | 10-2018-0063780 | A | 12 June 2018 | US | 10993269 | B2 | 27 April 2021 |
| | | | | US | 2020-0008243 | A1 | 02 January 2020 |
| | | | | WO | 2018-101544 | A1 | 07 June 2018 |

Form PCT/ISA/210 (patent family annex) (July 2022)